# EUROPÄISCHE PATENTSCHRIFT

(11) **EP 2 857 731 B1**
(45) Veröffentlichungstag und Bekanntmachung des Hinweises auf die Patenterteilung: **02.11.2016**
(21) Anmeldenummer: 14186344.9
(22) Anmeldetag: 25.09.2014
(51) Int. Cl.: F16L 9/08, B32B 1/08, B32B 5/26, B32B 7/12, B32B 13/14

(54) **Vorpressrohr**
Lined pipe
Tuyau chemisé

(30) Priorität: 04.10.2013 DE 102013220150; 04.10.2013 DE 202013009289 U
(43) Veröffentlichungstag der Anmeldung: 08.04.2015
(73) Patentinhaber: Wayss & Freytag Ingenieurbau AG, 60489 Frankfurt am Main (DE)
(72) Erfinder: Osthoff, Günter, 59348 Lüdinghausen (DE); Sunkel, Alexander, 40595 Düsseldorf (DE)
(74) Vertreter: DREISS Patentanwälte PartG mbB

(56) Entgegenhaltungen:
- EP-A2- 0 151 930
- EP-A2- 0 360 758
- DE-A1- 10 359 912
- DE-U- 6 913 721
- US-A- 3 742 985

## Beschreibung

Die Erfindung betrifft ein begehbares Vorpressrohr, insbesondere zum Transport von aggressiven Medien, umfassend ein Innenrohr aus einem chemikalienbeständigen Material und ein Außenrohr aus Beton.

Vorpressrohre werden beim Rohrvortrieb, also bei einer Methode zum grabenlosen Verlegen von Rohren, verwendet. Unter einem begehbaren Vorpressrohr versteht man hierbei ein Vorpressrohr mit einem Nenndurchmesser von mindestens 1400mm. Beim Rohrvortrieb wird, zumeist ausgehend von einem Vertikalschacht, eine dem geplanten Rohrverlauf entsprechende Medienleitung mittels einer Tunnelbohrmaschine ins Erdreich eingebracht. Eine solche Medienleitung verläuft teilweise in großen Tiefen. Der Tunnelbohrmaschine direkt folgend werden die Vorpressrohre in den Vertikalschacht abgelassen, eingebaut und anschließend vorgepresst. Die vorangegangenen Rohre werden dabei jeweils von den nachfolgenden Rohren vorwärts geschoben bzw. getrieben. Durch diese Verlegetechnik entfallen ein Ausheben und ein dem Verlegen folgendes Zuschütten eines Grabens, was ein Verlegen in großen Verlegetiefen erst ermöglicht. Bei einem solchen Rohrvortrieb treten hohe Normalkräfte auf, welche durch das Rohrmaterial aufgenommen werden müssen. Herkömmliche Vorpressrohre sind üblicherweise aus Beton oder Stahlbeton gefertigt. Diese Werkstoffe haben eine ausreichende Stabilität, um die auftretenden Normalkräfte aufzunehmen. Betonbasierte Rohre sind jedoch nur bedingt für den Transport mancher aggressiver Medien geeignet. Die aggressiven Medien können den Betonwerkstoff angreifen und die strukturelle Beständigkeit der Vorpressrohre kann hierdurch beeinträchtigt werden. DE 103 59 912 A1 befasst sich mit Verbundhalbzeugen für Rohrleitungen aller Art, wobei ein Innenrohr aus Kunststoff und ein Außenrohr aus Metall und Kleber oder aus Glasfaser mit Harz oder aus Beton besteht. Zwischen diesen ist eine elektromagnetische Strahlung absorbierende Kopplungsschicht aus entsprechendem Kunststoffmaterial wie das des Innenrohrs und eine Haftvermittlungsschicht vorgesehen. Das Material der Haftvermittlungsschicht ist innen sowohl teilweise eingebettet in das Material des Innenrohrs und steht außen in Richtung auf das Außenrohr teilweise vor, so dass das Material des Außenrohr damit verbunden werden kann.

Der vorliegenden Erfindung liegt die Aufgabe zugrunde, ein Vorpressrohr zu schaffen, also ein Rohr, welches im Rohrvortrieb verlegt werden kann, welches sich zum Transport von aggressiven Medien eignet und auf einfache und wirtschaftliche Weise herstellbar und verlegbar ist.

Diese Aufgabe wird durch ein Vorpressrohr der eingangs genannten Art gelöst, dass erfindungsgemäß dadurch gekennzeichnet ist, dass das Innenrohr von einem Faserverbundwerkstoff gebildet ist, dass der Faserverbundwerkstoff mindestens eine tragende Schicht aufweist, welche 50 Gew.-% bis 80 Gew.-% an Fasern umfasst, die in einer Umfangsrichtung und/oder schraubenförmig, und zudem mehrlagig gewickelt sind und dass die tragende Schicht 20 Gew.-% bis 40 Gew.-% an Matrixmaterial umfasst, welches auf Reaktivharz basiert, dass der Faserverbundwerkstoff eine radial äußere Oberflächenschicht aufweist, welche mindestens 70 Gew.-% an alkalibeständigem Reaktivharz, insbesondere an im Wesentlichen vollständig gesättigtem Reaktivharz, umfasst, und dass das Außenrohr aus Beton an die vollständig ausreagierte radial äußere Oberflächenschicht angegossen ist.

Das erfindungsgemäße Vorpressrohr hat den Vorteil, dass beim Rohrvortrieb in Vortriebsrichtung, d.h. in Rohrlängsrichtung auftretende Normalkräfte durch das Außenrohr aus Beton aufgenommen werden, während das Innenrohr durch seine Beschaffenheit eine hohe Resistenz gegen chemikalieninduzierte Werkstoffschädigung bietet. Die erfindungsgemäße Beschaffenheit des Innenrohrs gewährleistet überdies, dass das Innenrohr Kräfte, welche im verlegten Zustand insbesondere in radialer Richtung auf das Rohr wirken, auch bei Ausfall oder Beschädigung des Außenrohrs aufnehmen kann. Eine solche Kraft ist beispielsweise hydrostatischer Druck, welcher bei Verlegung in großen Tiefen relevant ist. Das Innenrohr ist daher im verlegten Zustand selbsttragend.

Nach einer bevorzugten Ausführungsform der vorliegenden Erfindung umfasst die tragende Schicht bezogen auf das Gewicht der tragenden Schicht bis zu 20 Gew.-%, insbesondere 10 Gew.-% bis 20 Gew.-% an Fasern, welche im Wesentlichen entlang einer Längsrichtung des Vorpressrohrs verlaufen. Ein Vorpressrohr, welches Fasern der eben genannten Ausrichtung umfasst, besitzt vorteilhafte mechanische Eigenschaften, insbesondere können Normalkräfte, also Kräfte entlang der Längsrichtung durch das Innenrohr aufgenommen werden.

Nach einer weiteren bevorzugten Ausführungsform der Erfindung ist das alkalibeständige Reaktivharz der radial äußeren Oberflächenschicht ein Bisphenol-A-basiertes Reaktivharz, insbesondere ein Bisphenol-A-basiertes Vinylesterharz. Reaktivharze der eben genannten Art sind besonders beständig gegen alkalische Medien. Die radial äußere Oberflächenschicht des Innenrohres steht in Kontakt mit dem Außenrohr, welches aus Beton ist. Feuchtigkeit lässt Bestandteile des Betons alkalisch wirken. Bei ungeeigneten Reaktivharzen kann es dadurch zu einer Verseifungsreaktion des Reaktivharzes kommen. Eine solche Verseifung führt zu einer erhöhten Werkstoffschädigung des Innenrohres. Hierdurch kann die mechanische Integrität des Innenrohres beeinträchtigt werden. Die Verwendung der genannten erfindungsgemäßen Reaktivharze verhindert eine solche Verseifungsreaktion zuverlässig.

Als vorteilhaft hat sich ebenso erwiesen, wenn das Innenrohr ECR-Glasfasern umfasst. ECR-Glasfasern weisen eine besonders hohe Chemikalienbeständigkeit auf.

Erfindungsgemäß ist ebenso, dass das Matrixmaterial der tragenden Schicht ein Polyesterharz ist. Die Verwendung eines Polyesterharzes ermöglicht eine wirtschaftliche Herstellung des erfindungsgemäßen Vorpressrohrs.

Das Vorpressrohr kann vorteilhafter Weise auf einer Innenseite der tragenden Schicht eine weitere Schicht aufweisen, welche ein Harz, insbesondere ein Polyesterharz, und ein Wirrfasergelege umfasst. Die eben genannte erfindungsgemäße weitere Schicht bietet einen weiter verbesserten Schutz des Innenrohres vor chemikalienbedingter Werkstoffschädigung und mechanischer Beanspruchung durch die in dem Vorpressrohr transportierten aggressiven Medien. Es wird also verhindert, dass die tragende Schicht schädigenden Einflüssen ausgesetzt wird.

Als vorteilhaft hat sich des Weiteren erwiesen, dass das Vorpressrohr im Bereich eines Spitzendes mindestens eine Umfangsdichtung, insbesondere eine Gleitkeildichtung oder eine Rollringdichtung, aufweist, welche in der Umfangsrichtung umlaufend auf einer radial äußeren Oberfläche des Spitzendes angeordnet ist. Durch eine solche Umfangsdichtung wird eine Leckage des in der Rohrleitung zu transportierenden Mediums verhindert.

Im Sinne der Erfindung ist auch ein Vorpressrohr, das im Bereich eines Spitzendes mindestens zwei Umfangsdichtungen aufweist, welche in der Umfangsrichtung umlaufend auf einer radial äußeren Oberfläche des Spitzendes in einem axialen Abstand zueinander angeordnet sind, so dass zwischen den Umfangsdichtungen ein Ringraum gebildet ist. Vorteilhafterweise ist von dem Ringraum ausgehend mindestens eine Prüföffnung vorgesehen, die sich von dem Ringraum nach innen erstreckt und in einer Innenoberfläche des Vorpressrohrs mündet. Über die Prüföffnung kann die Dichtigkeit der den Ringraum begrenzenden Umfangsdichtungen im verlegten Zustand geprüft werden.

Vorteilhaft ist ebenso, wenn eine Stirnfläche eines Spitzendes und eine Stirnfläche eines Stumpfendes des Vorpressrohres eine Dünnbettbeschichtung auf Epoxidharzbasis aufweisen. Hierdurch wird eine Werkstoffschädigung des Außenrohrs aus Beton aufgrund von Kontakt mit den transportierten aggressiven Medien verhindert.

Eine weitere bevorzugte Ausführungsform des Vorpressrohrs zeichnet sich dadurch aus, dass der Faserverbundwerkstoff Einstreuungen, insbesondere mineralische Einstreuungen aufweist, die gegenüber dem Faserverbundwerkstoff optisch erfassbar sind, und insbesondere schwarz sind. Die genannten erfindungsgemäßen mineralischen Einstreuungen erlauben eine Orientierung eines automatisierten Inspektionssystems zur Kontrolle des verlegten Rohrs, beispielsweise auf Schädigungen.

Als vorteilhaft hat sich ebenso erwiesen, wenn eine innere Oberfläche des Vorpressrohrs durch eine vliesverstärkte Harzschicht gebildet ist, welche mindestens 80 Gew.-% Reaktivharz insbesondere Polyesterharz umfasst. Die genannte vliesverstärkte Harzschicht ist besonders resistent gegen korrosive Medien.

Im Sinne der Erfindung ist es ebenso, dass das Vorpressrohr an einem Stumpfende eine zylindrische Manschette, insbesondere aus Stahl aufweist. Diese zylindrische Manschette unterstützt eine bündige und koaxiale Verlegung mehrerer Vorpressrohre zu einem Rohrstrang.

Als besonders vorteilhaft hat sich herausgestellt, wenn die Manschette formschlüssig in dem Außenrohr verankert ist, vorzugsweise, ein Befestigungselement der Manschette in das Außenrohr eingegossen ist.

Als vorteilhaft hat sich ebenso erwiesen, wenn die innere Oberfläche des Innenrohrs eine Rauigkeit aufweist, so dass die innere Oberfläche eine Reibungszahl von mindestens 0,7 aufweist. Eine solche Rauigkeit ermöglicht die Verwendung von automatisierten fahrbaren Inspektionssystemen in dem Vorpressrohr und bietet hierfür einen guten "Grip".

Die Reibungszahl wird hierbei an einer Ebene mit verstellbarem, ablesbarem Neigungswinkel ermittelt. Die Ebene besteht aus einer Platte, die den gleichen Aufbau aufweist wie das entsprechende Innenrohr. Ein Prüfkörper mit einer glatten Oberfläche aus VULKOLLAN 18 wird auf der Ebene platziert. VULKOLLAN 18 ist ein Polyurethan-Werkstoff der Firma Bayer, welcher durch Polyaddition unter ausschließlicher Verwendung von Desmodur 15, Polyester-Polyol und einem Vernetzer hergestellt wird. Der Neigungswinkel der Ebene wird erhöht. Ein Neigungswinkel bei welchem der Prüfkörper beginnt die Ebene herabzurutschen wird gemessen. Die Reibungszahl entspricht dem Tangens des Neigungswinkels, bei welchem der Prüfkörper beginnt, die Ebene herabzurutschen.

In einer bevorzugten Ausführungsform ist das Außenrohr des Vorpressrohrs unter Verwendung von Stahlbeton hergestellt. Die Verwendung von Stahlbeton zur Herstellung des Außenrohrs ermöglicht im Rohrvortrieb die Aufnahme großer Normalkräfte.

Im Sinne der Erfindung ist ebenso ein Vorpressrohrstrang, welcher mehrere koaxial verlaufende erfindungsgemäße Vorpressrohre umfasst, bei welchen in einem verlegten Zustand eine Stirnfläche eines Stumpfendes eines ersten Vorpressrohrs zu einer Stirnfläche eines Spitzendes eines zweiten Vorpressrohrs beabstandet angeordnet ist.

In einer Weiterbildung des erfindungsgemäßen Vorpressrohrstrangs ist im verlegten Zustand jeweils ein Kraftübertragungselement, insbesondere eine Holzringscheibe, zwischen der Stirnfläche des Stumpfendes des ersten Vorpressrohres und der Stirnfläche des Spitzendes des zweiten Vorpressrohres angeordnet und zwar vorzugsweise nur zwischen den Außenrohren aus Beton.

Die Verwendung eines solchen Kraftübertragungselements ermöglicht den beschädigungsfreien Vortrieb des erfindungsgemäßen Vorpressrohrstrangs, da durch das Kraftübertragungselement ein direkter Kontakt der Stirnflächen des Spitz- und des Stumpfendes und eine Krafteinwirkung auf das Innenrohr vermieden wird.

Weitere Merkmale, Einzelheiten und Vorteile der Erfindung ergeben sich aus den beigefügten Patentansprüchen, der zeichnerischen Darstellung und nachfolgenden Beschreibung mehrerer bevorzugter Ausführungsformen des erfindungsgemäßen Vortriebsrohrs sowie des erfindungsgemäßen Vortriebsrohrstrangs.

In der Zeichnung zeigt:
- Figur 1: eine vereinfachte schematische Schnittansicht eines erfindungsgemäßen Vorpressrohres;
- Figur 2: eine vergrößerte Schnittansicht eines Teils des Innenrohres aus Figur 1;
- Figur 3: eine Schnittansicht eines Teils einer weiteren Ausführungsform eines erfindungsgemäßen Vorpressrohres; und
- Figur 4: eine schematische Schnittansicht eines Teils eines Vorpressrohrstrangs.

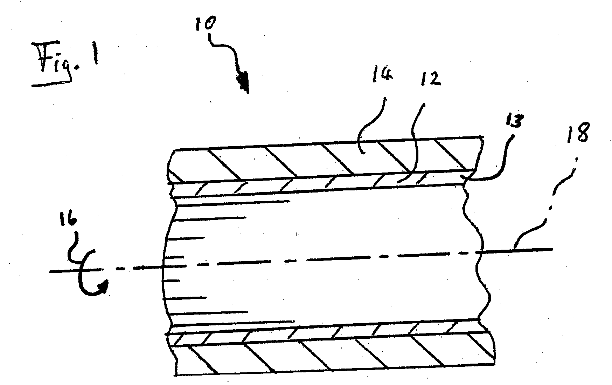

Figur 1 zeigt eine schematische größenmäßig nicht skalierte Schnittansicht eines erfindungsgemäßen Vorpressrohrs 10. Das Vorpressrohr 10 umfasst ein Innenrohr 12, welches aus einem chemikalienbeständigen Faserverbundwerkstoff 13 gebildet ist und ein Außenrohr 14 aus Beton. Eine Umfangsrichtung trägt das Bezugszeichen 16 und eine Längsachse des Vorpressrohrs trägt das Bezugszeichen 18.

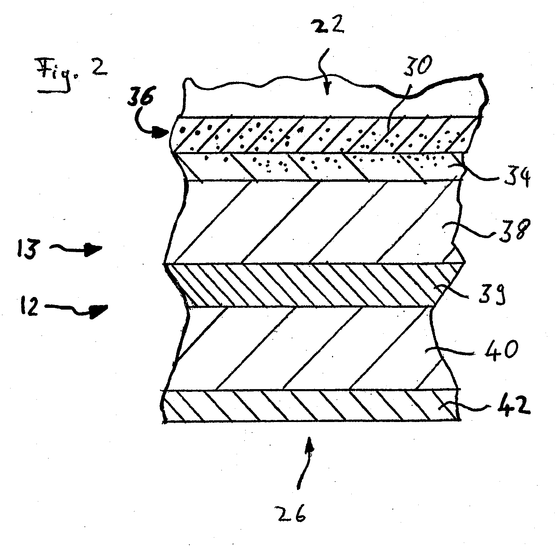

Figur 2 zeigt eine detaillierte schematische Darstellung eines vergrößerten Bereichs des Innenrohres 12 aus Figur 1. Der das Innenrohr 12 bildende Faserverbundwerkstoff 13 ist mehrschichtig aufgebaut. Von einer Innenseite 22 zu einer Außenseite 26 hin gesehen ist der Faserverbundwerkstoff 13 und damit auch das Innenrohr aufgebaut aus, einer fließverstärkten Harzschicht 30, einer weiteren Schicht 34, wobei die fließverstärkte Harzschicht 30 und die weitere Schicht 34 punktförmig dargestellte mineralische Einstreuungen 36 umfassen, einer ersten tragenden Schicht 38, einer Füllstoffschicht 39 sowie einer zweiten tragenden Schicht 40, und einer radial äußeren Oberflächenschicht 42. Die Füllstoffschicht umfasst Sand, welcher in einer Reaktivharzmatrix eingebettet ist. Der Sand einer solchen Füllstoffschicht 39 kann jedoch ebenso durch andere Füllmaterialien, insbesondere mineralische Füllmaterialien ersetzt werden. Die mineralischen Einstreuungen 36 können in jeder der Schichten 30, 34, 38, 39, 40, 42 des Faserverbundwerkstoffs 13 enthalten sein. Bevorzugter Weise sind die mineralischen Einstreuungen 36 mindestens in der fließverstärkten Harzschicht 30 und/oder der weiteren Schicht 34 enthalten.

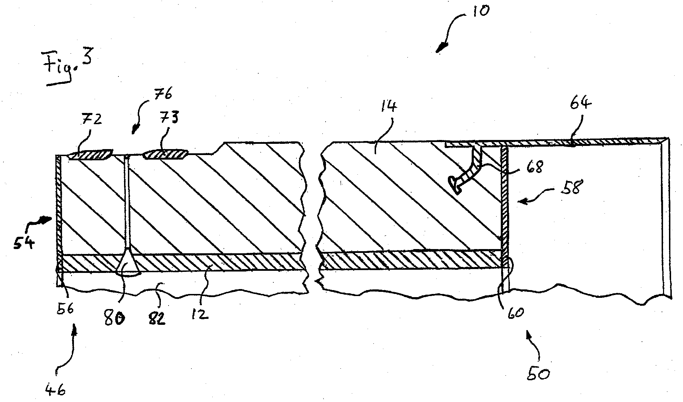

Figur 3 zeigt ein Spitzende 46 sowie ein Stumpfende 50 eines Vorpressrohrs 10. Eine Stirnseite 54 des Spitzendes 46 weist eine Dünnbettbeschichtung 56 auf. Eine Stirnseite 58 des Stumpfendes 50 weist eine Dünnbettbeschichtung 60 auf. An dem Stumpfende 50 des Vorpressrohrs 10 ist eine zylindrische Manschette 64 angeordnet. Die zylindrische Manschette 64 ist über ein Befestigungselement 68, welches in das Außenrohr 14 eingegossen ist, befestigt. Im Bereich des Spitzendes 46 ist eine erste Umfangsdichtung 72 und eine zweite Umfangsdichtung 73 in der Umfangsrichtung 16 umlaufend angeordnet. Zwischen den Umfangsdichtungen 72, 73 ist ein Ringraum 76 gebildet. Von dem Ringraum 76 erstreckt sich eine Prüföffnung 80 und mündet in einer Innenoberfläche 82 des Vorpressrohrs 10.

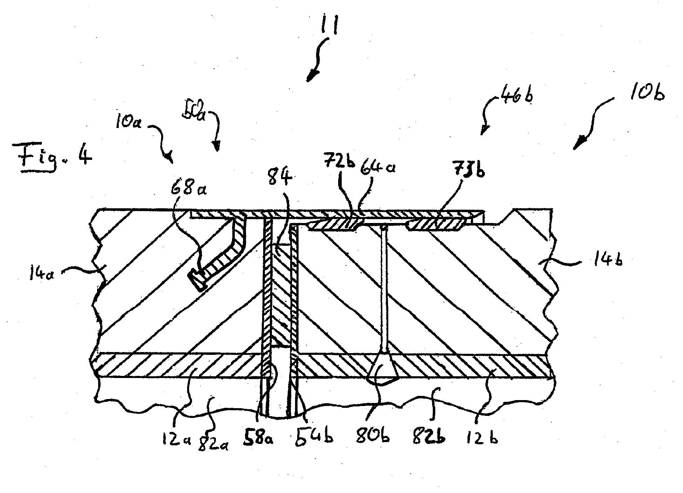

Figur 4 zeigt die Verbindung eines ersten Vorpressrohrs 10a mit einem zweiten Vorpressrohr 10b zu einem erfindungsgemäßen Vorpressrohrstrang 11. Entsprechende Bezugszeichen sind durch den Zusatz a oder b auf das jeweilige Rohr 10a, 10b bezogen. Das Stumpfende 50a des ersten Vorpressrohrs 10a steht in Betriebsverbindung mit dem Spitzende 46b des zweiten Vorpressrohrs 10b. Das Spitzende 46b ist dabei in die zylindrische Manschette 64a eingeführt. Zwischen den Dünnbettbeschichtungen 58a, 54b der beiden Rohre 10a, 10b ist ein Kraftübertragungselement 84 angeordnet.

Im Rohrvortrieb schiebt das zweite Rohr 10b das erste Rohr 10a über den Kontakt mittels des Kraftübertragungselements 84 vorwärts. Im verlegten Zustand fließt zu transportierendes Medium durch die Rohrinnenräume 82a bzw. 82b. Das zu transportierende Medium kommt dabei mit den Innenrohren 12a, 12b sowie den Dünnbettbeschichtungen 58, 54 in Kontakt.

Die Innenrohre 12a,b verhindern im Zusammenspiel mit den Dünnbettbeschichtungen 58a, 54b sowie den Umfangsdichtungen 72b, 73b und der zylindrische Manschette 64, dass zu transportierendes Medium in Kontakt mit dem Außenrohr 14 tritt. Hierdurch wird eine Werkstoffschädigung des Außenrohrs 14 verhindert.

## Patentansprüche

1. Begehbares Vorpressrohr (10), insbesondere zum Transport von aggressiven Medien, umfassend ein Innenrohr (12) aus einem chemikalienbeständigen Material und ein Außenrohr (14) aus Beton, **dadurch gekennzeichnet, dass** das Innenrohr (12) von einem Faserverbundwerkstoff (13) gebildet ist,
dass der Faserverbundwerkstoff (13) mindestens eine tragende Schicht (38, 40) aufweist, welche 50 Gew.-% bis 80 Gew.-% an Fasern umfasst, die in einer Umfangsrichtung (16) und/oder schraubenförmig, und zudem mehrlagig gewickelt sind, und
dass die tragende Schicht (38, 40) 20 Gew.-% bis 40 Gew.-% an Matrixmaterial umfasst, welches auf Reaktivharz basiert,
dass der Faserverbundwerkstoff (13) eine radial äußere Oberflächenschicht (42) aufweist, welche mindestens 70 Gew.-% an alkalibeständigem Reaktivharz, insbesondere an im Wesentlichen vollständig gesättigtem Reaktivharz, umfasst,
und dass das Außenrohr (14) aus Beton an die vollständig ausreagierte radial äußere Oberflächenschicht (42) angegossen ist.

2. Vorpressrohr (10) nach Anspruch 1, **dadurch gekennzeichnet, dass** die tragende Schicht (38, 40) bezogen auf das Gewicht der tragenden Schicht(38, 40) bis zu 20 Gew.-%, insbesondere 10 Gew.-% bis 20 Gew.-% an Fasern umfasst, welche im Wesentlichen entlang einer Längsrichtung des Vorpressrohrs (10) verlaufen.

3. Vorpressrohr (10) nach Anspruch 1 und/oder Anspruch 2, **dadurch gekennzeichnet, dass** das alkalibeständige Reaktivharz der radial äußeren Oberflächenschicht (42) ein Bisphenol-A basiertes Reaktivharz, insbesondere ein Bisphenol-A basiertes Vinylesterharz ist.

4. Vorpressrohr (10) nach einem oder mehreren der vorangegangenen Ansprüche, **dadurch gekennzeichnet, dass** das Innenrohr (12) ECR-Glas-Fasern umfasst.

5. Vorpressrohr (10) nach einem oder mehreren der vorangegangenen Ansprüche, **dadurch gekennzeichnet, dass** das Matrixmaterial der tragenden Schicht (38, 40) ein Polyesterharz ist.

6. Vorpressrohr (10) nach einem oder mehreren der vorangegangenen Ansprüche, **dadurch gekennzeichnet, dass** der Faserverbundwerkstoff (13) auf einer Innenseite der tragenden Schicht (38, 40) eine weitere Schicht (34) aufweist, welche ein Polyesterharz und ein Wirrfasergelege umfasst.

7. Vorpressrohr (10) nach einem oder mehreren der vorangegangenen Ansprüche, **dadurch gekennzeichnet, dass** es im Bereich eines Spitzendes (46) mindestens eine Umfangsdichtung (72, 73), insbesondere eine Gleitkeildichtung oder eine Rollringdichtung aufweist, welche in der Umfangsrichtung (16) umlaufend auf einer radial äußeren Oberfläche des Spitzendes (46) angeordnet ist.

8. Vorpressrohr nach einem oder mehreren der vorangegangenen Ansprüche, **dadurch gekennzeichnet, dass** es im Bereich eines Spitzendes (46) mindestens zwei Umfangsdichtungen (72, 73) aufweist, welche in der Umfangsrichtung (16) umlaufend auf einer radial äußeren Oberfläche des Spitzendes (46) in einem axialen Abstand zueinander angeordnet sind, so dass zwischen den Umfangsdichtungen (72, 73) ein Ringraum (76) gebildet ist, und dass mindestens eine Prüföffnung (80) vorgesehen ist, die sich von dem Ringraum (76) nach innen erstreckt und in einer Innenoberfläche (22) des Vorpressrohrs (10) mündet.

9. Vorpressrohr (10) nach einem oder mehreren der vorangegangenen Ansprüche, **dadurch gekennzeichnet, dass** eine Stirnfläche (54) eines Spitzendes (46) und eine Stirnfläche (58) eines Stumpfendes (50) eine Dünnbettbeschichtung (56, 60) auf Epoxidharzbasis aufweisen.

10. Vorpressrohr (10) nach einem oder mehreren der vorangegangenen Ansprüche, **dadurch gekennzeichnet, dass** der Faserverbundwerkstoff (13) Einstreuungen (36), insbesondere mineralische Einstreuungen (36) aufweist, die gegenüber dem Faserverbundwerkstoff (13) optisch erfassbar sind, und insbesondere schwarz sind.

11. Vorpressrohr (10) nach einem oder mehreren der vorangegangenen Ansprüche, **dadurch gekennzeichnet, dass** eine innere Oberfläche des Vorpressrohrs (10) durch eine vliesverstärkte Harzschicht (30) gebildet ist, welche mindestens 80 Gew.-% Reaktivharz, insbesondere Polyesterharz umfasst.

12. Vorpressrohr (10) nach einem oder mehreren der vorangegangenen Ansprüche, **dadurch gekennzeichnet, dass** es an einem Stumpfende (50) eine zylindrische Manschette (64), insbesondere aus Stahl aufweist.

13. Vorpressrohr (10) nach Anspruch 12, **dadurch gekennzeichnet, dass** die Manschette (64) formschlüssig in dem Außenrohr (14) verankert ist, vorzugsweise, dass ein Befestigungselement (68) der Manschette (64) in das Außenrohr (14) eingegossen ist.

14. Vorpressrohr (10) nach einem oder mehreren der vorangegangenen Ansprüche, **dadurch gekennzeichnet, dass** eine innere Oberfläche des Innenrohrs (12) eine Rauigkeit aufweist, so dass die innere Oberfläche eine Reibungszahl von mindestens 0,7 aufweist.

15. Vorpressrohrstrang (11), welcher mindestens zwei koaxial verlaufende Vorpressrohre (10) nach einem oder mehreren der vorangegangenen Ansprüche umfasst, **dadurch gekennzeichnet, dass** in einem verlegten Zustand eine Stirnfläche (58) eines Stumpfendes (50) eines ersten Vorpressrohrs (10) zu einer Stirnfläche (54) eines Spitzendes (46) eines zweiten Vorpressrohrs (10) beabstandet angeordnet ist, insbesondere im Bereich der Außenrohre (14a,b) des ersten Vorpressrohrs (10a) und des zweiten Vorpressrohrs (10b) ein Kraftübertragungselement (84) zwischen der Stirnfläche (58a) des Stumpfendes (50a) des ersten Vorpressrohrs (10a) und der Stirnfläche (54b) des Spitzendes (46b) des zweiten Vorpressrohrs (10b) angeordnet ist.

## Claims

1. An accessible jacking pipe (10), in particular for transporting aggressive media, comprising an inner pipe (12) made of a chemically resistant material, and an outer pipe (14) made of concrete, **characterized in that** the inner pipe (12) is formed from a fiber composite material (13),
the fiber composite material (13) includes at least one supporting layer (38, 40) which includes 50 wt-% to 80 wt-% of fibers that are wound in a circumferential direction (16) and/or helically and also in multiple layers, and
the supporting layer (38, 40) includes 20 wt-% to 40 wt-% of matrix material based on reactive resin,
the fiber composite material (13) has a radially outer surface layer (42) which includes at least 70 wt-% of alkali-resistant reactive resin, in particular a substantially completely saturated reactive resin, and
the outer pipe (14) made of concrete is cast onto the completely cured radially outer surface layer (42).

2. The jacking pipe (10) according to Claim 1, **characterized in that** the supporting layer (38, 40) includes up to 20 wt-%, in particular 10 wt-% to 20 wt-%, of fibers, based on the weight of the supporting layer, which extend substantially along a longitudinal direction of the jacking pipe (10).

3. The jacking pipe (10) according to Claim 1 and/or Claim 2, **characterized in that** the alkali-resistant reactive resin of the radially outer surface layer (42) is a bisphenol A-based reactive resin, in particular a bisphenol A-based vinyl ester resin.

4. The jacking pipe (10) according to one or more of the preceding claims, **characterized in that** the inner pipe (12) includes ECR glass fibers.

5. The jacking pipe (10) according to one or more of the preceding claims, **characterized in that** the matrix material of the supporting layer (38, 40) is a polyester resin.

6. The jacking pipe (10) according to one or more of the preceding claims, **characterized in that** the fiber composite material (13) has an additional layer, on an inner side of the supporting layer (38, 40), which includes a polyester resin and a random fiber fabric.

7. The jacking pipe (10) according to one or more of the preceding claims, **characterized in that** the jacking pipe in the area of a spigot end (46) has at least one circumferential seal (72, 73), in particular a sliding wedge seal or a rolling ring seal, which is situated circumferentially on a radially outer surface of the spigot end (46) in the circumferential direction (16).

8. The jacking pipe according to one or more of the preceding claims, **characterized in that** the jacking pipe has at least two circumferential seals (72, 73) in the area of a spigot end (46) which are situated circumferentially on a radially outer surface of the spigot end in the circumferential direction (16) at an axial distance from one another, so that an annular space (76) is formed between the circumferential seals (72, 73), and that at least one test opening (80) is provided which extends inwardly from the annular space (76) and opens into an inner surface (22) of the jacking pipe (10).

9. The jacking pipe (10) according to one or more of the preceding claims, **characterized in that** an end face (54) of a spigot end (46) and an end face (58) of a butt-end edge (50) have an epoxy resin-based thin bed coating (56, 60).

10. The jacking pipe (10) according to one or more of the preceding claims, **characterized in that** the fiber composite material (13) has interspersed particles (36), in particular interspersed mineral particles (36), which are visually detectable with respect to the fiber composite material (13), and in particular are black.

11. The jacking pipe (10) according to one or more of the preceding claims, **characterized in that** an inner surface of the jacking pipe (10) is formed by a nonwoven-reinforced resin layer (30) which includes at least 80 wt-% reactive resin, in particular polyester resin.

12. The jacking pipe (10) according to one or more of the preceding claims, **characterized in that** the jacking pipe has a cylindrical sleeve (64), in particular made of steel, at a butt-end edge (50).

13. The jacking pipe (10) according to Claim 12, **characterized in that** the sleeve (64) is anchored in a form-fit manner in the outer pipe (14), preferably by casting a fastening element (68) of the sleeve (64) into the outer pipe (14).

14. The jacking pipe (10) according to one or more of the preceding claims, **characterized in that** an inner surface of the inner pipe (12) has a roughness, so that the inner surface has a coefficient of friction of at least 0.7.

15. A jacking pipe string (11) which includes at least two coaxially extending jacking pipes (10) according to one or more of the preceding claims, **characterized in that**, in a laid state, an end face (58) of a butt-end edge (50) of a first jacking pipe (10) is situated at a distance from an end face (54) of a spigot end (46) of a second jacking pipe (10), in particular in the area of the outer pipes (14a, 14b) of the first jacking pipe (10a) and of the second jacking pipe (10b) a force transmission element (84) is situated between the end face (58a) of the butt-end edge (50a) of the first jacking pipe (10a) and the end face (54b) of the spigot end (46b) of the second jacking pipe (10b).

## Revendications

1. Tuyau avancé par poussée (10) praticable, en particulier pour le transport de milieux agressifs, comprenant un tuyau intérieur (12) en un matériau résistant aux substances chimiques et un tuyau extérieur (14) en béton, **caractérisé par le fait que** le tuyau intérieur (12) est formé d'un matériau composite renforcé par fibres (13),
que le matériau composite renforcé par fibres (13) présente au moins une couche porteuse (38, 40) qui comprend entre 50 % en poids et 80 % en poids de fibres qui sont enroulées suivant une direction circonférentielle (16) et/ou de façon hélicoïdale et en sus à plusieurs couches, et
que ladite couche porteuse (38, 40) comprend de 20 % en poids à 40 % en poids de matière de matrice qui est à base de résine réactive,
que le matériau composite renforcé par fibres (13) présente une couche superficielle (42) radialement extérieure qui comprend au moins 70 % en poids de résine réactive résistante aux alcalis, en particulier de résine réactive pour l'essentiel complètement saturée,
et que le tuyau extérieur (14) en béton est coulé sur ladite couche superficielle (42) radialement extérieure qui a complètement réagi.

2. Tuyau avancé par poussée (10) selon la revendication 1, **caractérisé par le fait que** ladite couche porteuse (38, 40) comprend, par rapport au poids de la couche porteuse (38, 40), jusqu'à 20 % en poids, en particulier entre 10 % en poids et 20 % en poids de fibres qui s'étendent pour l'essentiel le long d'une direction longitudinale du tuyau avancé par poussée (10).

3. Tuyau avancé par poussée (10) selon la revendication 1 et/ou la revendication 2, **caractérisé par le fait que** la résine réactive résistante aux alcalis de la couche superficielle (42) radialement extérieure est une résine réactive à base de bisphénol A, en particulier une résine d'ester vinylique à base de bisphénol A.

4. Tuyau avancé par poussée (10) selon l'une ou plusieurs des revendications précédentes, **caractérisé par le fait que** le tuyau intérieur (12) comprend des fibres de verre ECR.

5. Tuyau avancé par poussée (10) selon l'une ou plusieurs des revendications précédentes, **caractérisé par le fait que** la matière de matrice de la couche porteuse (38, 40) est une résine de polyester.

6. Tuyau avancé par poussée (10) selon l'une ou plusieurs des revendications précédentes, **caractérisé par le fait que** le matériau composite renforcé par fibres (13) présente, sur une face intérieure de la couche porteuse (38, 40), une autre couche (34) qui comprend une résine de polyester et une nappe de fibres embrouillées.

7. Tuyau avancé par poussée (10) selon l'une ou plusieurs des revendications précédentes, **caractérisé par le fait que**, au niveau d'une extrémité pointue (46), il présente au moins un joint d'étanchéité périphérique (72, 73), en particulier un joint d'étanchéité à coin glissant ou un joint d'étanchéité à anneau roulant, qui est disposé de manière périphérique dans la direction circonférentielle (16) sur une surface radialement extérieure de l'extrémité pointue (46).

8. Tuyau avancé par poussée selon l'une ou plusieurs des revendications précédentes, **caractérisé par le fait que**, au niveau d'une extrémité pointue (46), il présente au moins deux joints d'étanchéité périphériques (72, 73) qui sont disposés de manière périphérique dans la direction circonférentielle (16) sur une surface radialement extérieure de l'extrémité pointue (46) à une distance axiale l'un par rapport à l'autre, de sorte qu'un espace annulaire (76) est formé entre les joints d'étanchéité périphériques (72, 73), et qu'au moins une ouverture d'inspection (80) est prévue qui s'étend vers l'intérieur à partir de l'espace annulaire (76) et débouche dans une surface intérieure (22) du tuyau avancé par poussée (10).

9. Tuyau avancé par poussée (10) selon l'une ou plusieurs des revendications précédentes, **caractérisé par le fait qu'**une surface frontale (54) d'une extrémité pointue (46) et une surface frontale (58) d'une extrémité obtuse (50) présentent un revêtement à lit mince (56, 60) à base de résine époxy.

10. Tuyau avancé par poussée (10) selon l'une ou plusieurs des revendications précédentes, **caractérisé par le fait que** le matériau composite renforcé par fibres (13) présente des matières y répandues (36), en particulier des matières minérales y répandues (36) qui peuvent être perçues optiquement par rapport au matériau composite renforcé par fibres (13) et qui, en particulier, sont noires.

11. Tuyau avancé par poussée (10) selon l'une ou plusieurs des revendications précédentes, **caractérisé par le fait qu'**une surface intérieure du tuyau avancé par poussée (10) est formée par une couche de résine (30) renforcée par non-tissé qui comprend au moins 80 % en poids de résine réactive, en particulier de la résine de polyester.

12. Tuyau avancé par poussée (10) selon l'une ou plusieurs des revendications précédentes, **caractérisé par le fait qu'**il présente un manchon cylindrique (64), en particulier en acier, à une extrémité obtuse (50).

13. Tuyau avancé par poussée (10) selon la revendication 12, **caractérisé par le fait que** ledit manchon (64) est ancré à engagement positif à l'intérieur du tuyau extérieur (14), de préférence qu'un élément de fixation (68) du manchon (64) est coulé dans le tuyau extérieur (14).

14. Tuyau avancé par poussée (10) selon l'une ou plusieurs des revendications précédentes, **caractérisé par le fait qu'**une surface intérieure du tuyau intérieur (12) présente une rugosité de sorte que la surface intérieure présente un coefficient de frottement d'au moins 0,7.

15. Ligne de tuyaux avancés par poussée (11) qui comprend au moins deux tuyaux avancés par poussée (10) s'étendant de manière coaxiale selon l'une ou plusieurs des revendications précédentes, **caractérisée par le fait que**, dans un état posé, une surface frontale (58) d'une extrémité obtuse (50) d'un premier tuyau avancé par poussée (10) est disposée à distance par rapport à une surface frontale (54) d'une extrémité pointue (46) d'un deuxième tuyau avancé par poussée (10), que, en particulier, au niveau des tuyaux extérieurs (14a, b) du premier tuyau avancé par poussée (10a) et du deuxième tuyau avancé par poussée (10b), un élément de transmission de force (84) est disposé entre la surface frontale (58a) de l'extrémité obtuse (50a) du premier tuyau avancé par poussée (10a) et la surface frontale (54b) de l'extrémité pointue (46b) du deuxième tuyau avancé par poussée (10b).
